(19) **Europäisches Patentamt**

**European Patent Office**

**Office européen des brevets**

(11) **EP 1 155 621 B1**

(12) **EUROPÄISCHE PATENTSCHRIFT**

(45) Veröffentlichungstag und Bekanntmachung des Hinweises auf die Patenterteilung:
**27.10.2004   Patentblatt 2004/44**

(51) Int Cl.[7]: **A23G 3/30**

(21) Anmeldenummer: **01106672.7**

(22) Anmeldetag: **16.03.2001**

(54) **Vorrichtung zur Herstellung von Kaugummi**

Apparatus for preparing chewing gum

Appareillage pour la préparation du chewing gum

(84) Benannte Vertragsstaaten:
**CH DE DK FR GB LI**

(30) Priorität: **18.05.2000   DE 10024122**

(43) Veröffentlichungstag der Anmeldung:
**21.11.2001   Patentblatt 2001/47**

(73) Patentinhaber: **LIPP Mischtechnik GmbH 68309 Mannheim (DE)**

(72) Erfinder: **Lipp, Eberhardt, Dipl.-Ing. 67122 Altrip (DE)**

(74) Vertreter: **Petersen, Frank, Dipl.-Ing. et al Lemcke, Brommer & Partner Patentanwälte Postfach 11 08 47 76058 Karlsruhe (DE)**

(56) Entgegenhaltungen:
**EP-A- 0 732 059**

## Beschreibung

Die Erfindung betrifft eine Vorrichtung zur Herstellung von Kaugummi mit einem Mischer, in dem Kaugummigrundmasse (Gumbase) geknetet und mit Aromaund/oder Farbstoffen vermengt wird, gemäß dem Oberbegriff des beigefügten Anspruches 1.

Vorrichtungen dieser Art sind bekannt. Üblicherweise handelt es sich dabei um Mischer, die mit Z-Arm-Knetern die Kaugummigrundmasse und die entsprechend zugewogenen Komponenten für ca. 20 bis 30 Minuten scheren und mischen. Die Temperatur der gekneteten Masse wird dabei durch ein Temperieren des Mischermantels auf ca. 45 bis 50 °C gehalten. Erst am Ende dieses Prozesses werden noch die Geschmacksstoffe zugegeben.

Die gemischte Masse wird dann chargenweise Verformungsextrudern zugeführt, anschließend gekühlt, geformt und verpackt.

Eine weitere Vorrichtung mit den oben genannten Merkmalen ist bekannt aus der EP-A-0 732 059.

Diese beschriebenen Vorrichtungen haben eine Reihe von Nachteilen: Zum einen sind wegen der langen Mischzeiten große und damit entsprechend teure Knetmaschinen notwendig, um einen gewissen Ausstoß sicherzustellen. Dies bewirkt auch einen hohen Platzbedarf für die Ausrüstung und gleichzeitig hohe Investitionen.

Außerdem ist die Kaugummimasse sehr klebrig und läßt sich deshalb ohne manuelles Eingreifen nur unvollständig aus diesen vorbekannten Mischern entleeren. Dies führt nicht nur zu Produktverschleppungen von einer Charge zur nächsten sondern auch der Reinigungsaufwand bei einem Produktwechsel ist bei derartigen Mischern sehr hoch.

Die verwendeten Kneter mit Z-Armen haben auch nur eine eingeschränkte Mischwirkung, weswegen die Homogenität, die Konsistenz und die Farbe der erzeugten Kaugummimasse von Charge zu Charge schwanken kann. Dies führt nicht nur zu Qualitätseinbußen sondern hat auch Auswirkungen bei den nachgeschalteten Verpackungsmaschinen. Diese verlangen präzise Produkteigenschaften und -formate, um einen Leistungsgrad in der Nähe von 100 % zu erzielen. Bei schwankenden Produkteigenschaften kann der Leistungsgrad der gesamten Anlage leicht bis auf 50 % absinken.

Die langen Verweilzeiten im Mischer und die trotzdem nur eingeschränkte Mischwirkung führen entweder zu unerwünschtem Verlust an teuren Geschmacksstoffen durch Ausdampfen etc. oder aber zu erhöhtem Bedarf solcher Stoffe. Um dem entgegenzuwirken, muss mit einem höheren Personalbedarf die Produktion entsprechend stärker überwacht werden.

Aufgabe der vorliegenden Erfindung ist es daher, eine Vorrichtung zur Herstellung von Kaugummi anzugeben, die die oben beschriebenen Nachteile umgeht. Insbesondere soll sie preiswerter sein und eine gleichmäßigere Produktqualität gewährleisten.

Diese Aufgabe wird erfindungsgemäß dadurch gelöst, dass der vorgesehene Mischer ein in Axialrichtung durchströmter Hochschermischer ist, in dem eine Vielzahl von ringförmigen Statorteilen radial nach innenragend an der Innenwand eines im wesentlichen zylinderförmigen Gehäuses angeordnet ist, mit denen unter Bildung von Mahlspalten die radial äußeren Enden von umlaufenden Mischflügeln kämmen.

Der Vorteil der Erfindung liegt darin, dass zum einen eine kontinuierliche Herstellung von Kaugummi mit diesem Mischer möglich ist. Daraus resultiert dann auch, dass der Hochschermischer ein insgesamt kleineres Volumen haben kann. Von daher sind auch keine Produktverschleppungen zwischen einzelnen Chargen zu erwarten, insbesondere weil ein derartiger Hochschermischer auch einfach zu reinigen ist. Man hat auch nur einen geringeren Platzbedarf für die Maschine und da sich ein kontinuierlicher Prozeß, wie er mit der erfindungsgemäßen Vorrichtung möglich ist, einfacher überwachen läßt, fallen auch insgesamt geringere Personalkosten an.

Bei einer besonders bevorzugten Ausführungsform sind die vorgesehenen Statorteile noch mit Zähnen versehen, wodurch die Vermischung besonders schnell und intensiv erfolgen kann.

Es wird vorgeschlagen, dass der Hochschermischer ein Verhältnis von Länge zu Durchmesser (L/D) von ≤ 4 hat, was für den geringen Platzbedarf eines derartigen Mischers spricht. Es ist damit auch eine Produktverweilzeit im Mischer von weniger als 30 sec. zu erreichen, so dass insgesamt auch ein hoher Durchsatz durch den Mischer möglich ist.

Der erfindungsgemäße Hochschermischer kann im Gehäuse auch noch einen Einzugsbereich vorgeschaltet haben, in dem die eventuell tangential zugeführten Grundstoffe in ihrer Strömung in eine axiale Richtung umgelenkt werden und in dem diese Grundstoffe vorgemischt und gegebenenfalls vorverkleinert werden können.

Damit der gesamte Hochschermischer für die intensive Vermengung der einzelnen Bestandteile der Kaugummimasse genutzt werden kann, wird vorgeschlagen, im Einzugsbereich vor dem Hochschermischer eine Zuführleitung vorzusehen, durch die die Aroma- und/oder Farbstoffe der Kaugummigrundmasse zugegeben werden.

Bei der erfindungsgemäßen Vorrichtung ist am Ausgang des Hochschermischers noch ein Temperaturfühler vorgesehen, dessen Meßwert in einer Motorsteuerung verarbeitet wird. Über diese ist die Drehzahl des Hochschermischers zu regeln, das heißt insbesondere die Drehzahl einer Rotorwelle, die den im Hochschermischer rotierenden Mischflügel trägt. Auch die Antriebsleistung für die Rotorwelle ist in der Motorsteuerung verarbeitbar, wobei für die Drehzahlanpassung vorzugsweise ein Frequenzumformer verwandt wird, mit dem die Drehzahl des Antriebmotors gesteuert wird. Bei diesem Antriebsmotor handelt es sich dabei vorzugsweise um einen Drehstrommotor.

Die notwendige Drehzahl der Rotorwelle ist abhängig von der Produktrezeptur, der Partikelgröße der Gumbase und der Durchsatzleistung: Größere Gumbase-Partikel benötigen höhere Drehzahl als kleinere Partikel, ebenso steigt die Drehzahl proportional mit der Durchsatzleistung.

Der hier beschriebene Hochschermischer arbeitet für Kaugummi dabei je nach Rezeptur, Größe der Gumbase-Partikel und der Durchsatzleistung mit Froude-Zahlen, die zwischen 18 und 400 liegen. Diese Froude-Zahl bestimmt sich dabei wie folgt:

$$Fr = v^2/(r \cdot g)$$

$v$ = Umfangsgeschwindigkeit     [m/sec]
$r$ = Radius der Mischflügel     [m]
$g$ = Erdbeschleunigung     [m/sec$^2$]

Es hat sich herausgestellt, dass mit einer derartigen Vorrichtung die im Hochschermischer vorhandene Kaugummimasse Temperaturen im Bereich von 50 bis 75 °C haben darf, die durch die Dissipation der Antriebsenergie im Produkt erreicht wird. Aufgrund der oben angesprochenen kurzen Verweildauer hat diese hohe Temperatur entgegen im Stand der Technik veröffentlichten Vorurteilen keine negativen Effekte. Vielmehr haben mit der erfindungsgemäßen Vorrichtung erzeugte Produkte bessere Eigenschaften im Hinblick auf ihre Homogentität, ihre sensorischen Eigenschaften und auch ihre Handhabbarkeit beim Verpacken als bei den bisher bekannten Methoden erreichbar waren.

Auch die Verluste an Geruchs- und Geschmacksstoffen sind geringer als bei den herkömmlichen Prozessen üblich, wobei in diesem Zusammenhang vorgeschlagen wird, dem Mischer eine Kühlvorrichtung nachzuschalten, um eine ungewünschte Verflüchtigung derartiger Aromen aus der Kaugummimasse zu verhindern, die warm aus dem Hochschermischer austritt.

Bei einer derartigen Kühlvorrichtung kann es sich beispielsweise um Kühlwalzen handeln oder aber bereits um einen gekühlten Verformextruder.

Damit die beschriebene Vorrichtung auch über längere Zeiträume einen konstanten Ausstoß haben kann, wird im übrigen noch vorgeschlagen, dem Mischer eine steuerbare Dosiervorrichtung vorzuschalten, mit der Feststoffkomponenten kontinuierlich zugeführt werden. Auch die flüssigen Zuschläge wie Aromen und Farbstoffe werden dabei über eine steuerbare Dosiervorrichtung zugefügt.

Weitere Vorteile und Merkmale der Erfindung ergeben sich aus der nachfolgenden Beschreibung eines Ausführungsbeispiels. Dabei zeigt

Figur 1     eine Prinzipskizze einer erfindungsgemäßen Vorrichtung;

Figur 2     einen Schnitt durch einen erfindungsgemäß vorgesehenen, in Axialrichtung durchströmten Hochschermischer.

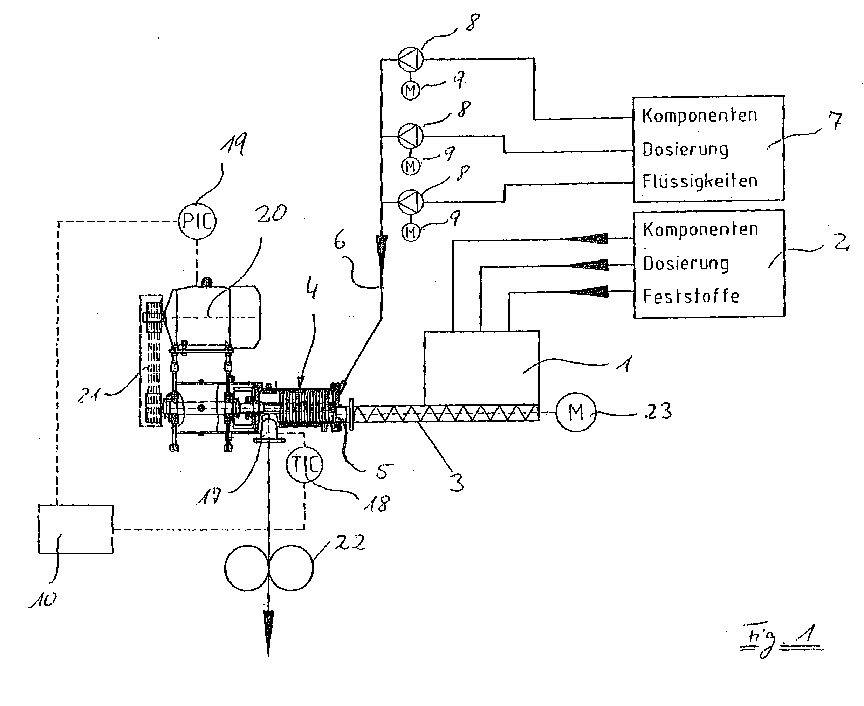

In Figur 1 erkennt man die Prinzipskizze einer erfindungsgemäßen Vorrichtung. In einen Vormischerbehälter 1 werden aus einer Siloanlage 2 o. ä. Feststoffe vermischt, die als Komponenten der Kaugummiherstellung in einem richtigen Verhältnis zueinander zu dosieren sind. Bei diesen Feststoffen handelt es sich um eine Kaugummigrundmasse, sogenannte Gumbase, Zucker - bzw. bei zuckerfreiem Kaugummi Zuckerersatzstoffe wie Manitol, Sorbitol oder Zylitol etc.- Lactose oder eventuelle Rückware.

Das in den Vormischbehälter 1 vermengte Gut wird über einen Schneckenförderer 3 dem erfindungsgemäß vorgesehen Hochschermischer 4 zugeführt. Die Gumbase muss dabei nur grob vorzerkleinert sein, Kantenlängen von bis zu 30 mm sind in der Verarbeitung problemlos möglich.

Am Eintritt des eigentlichen Hochschermischers läuft das Gut durch einen Einzugsbereich 5, wo es von der Strömung her in die richtige Richtung umgelenkt wird und wo die Vormischung und die Vorzerkleinerung abgeschlossen werden. In diesen Einzugsbereich 5 ist noch eine Zuführleitung 6 vorgesehen, mit der Flüssigkeiten als Mischkomponente dem vermengten Feststoffgut beigesetzt werden. Derartige Komponenten wie Aromen, Farbstoffe, flüssige Glukose etc. werden üblicherweise aus Containern 7 über Dosierpumpen 8 in die Zuführleitung 6 gelassen, wobei die Dosierpumpen durch regelbare Motoren 9 angetrieben werden. Die Motoren 9, wie auch der Motor 23 für die Schnecke 3 sind dabei über nicht dargestellte Leitungen mit einer zentralen Steuerung 10 verbunden, auf die noch einmal später eingegangen wird.

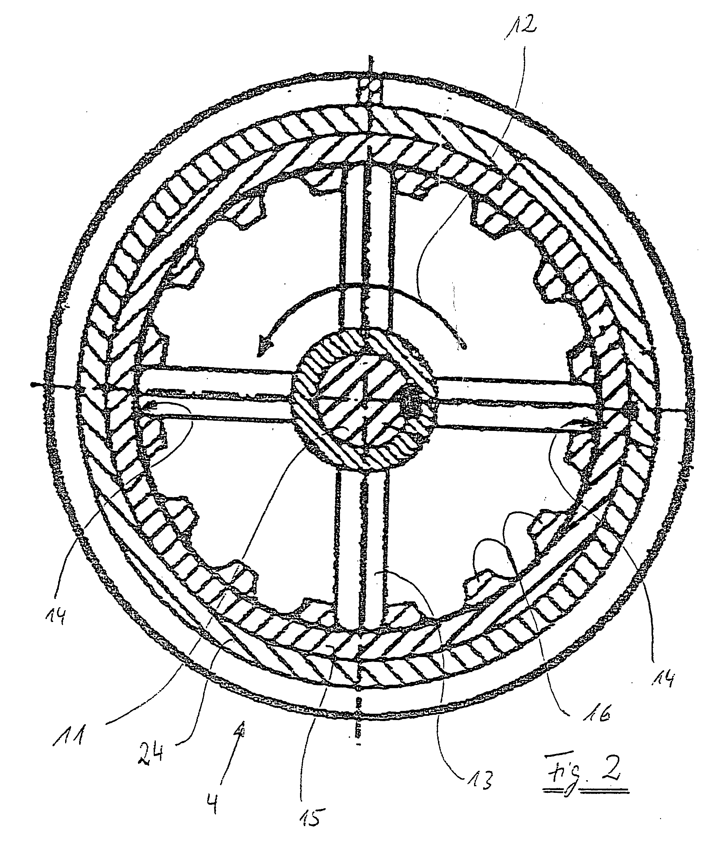

Im Hochschermischer 4, der in der Figur 2 im Schnitt dargestellt ist, rotiert eine Rotorwelle 11 gemäß dem in Figur 2 dargestellten Pfeil 12 mit einer Drehzahl, die zwischen 350 - 2000 min$^{-1}$ liegt. An dieser Rotorwelle 11 sind axial hintereinander im wesentlichen radial verlaufende Mischflügel 13 befestigt. Diese Mischflügel 13 scheren an ihren radial äußeren Enden 14 mit ringförmigen Statorteilen, die in Axialrichtung nebeneinander an der Wand eines zylinderförmigen Gehäuses 24 angeordnet sind. Zwischen den radial äußeren Enden 14 der Mischflügel 13 und den ringförmigen Statorteilen 15 bilden sich dabei Mahlspalte. Durch diese Mahlspalte wird die in den Hochschermischer eingeführte Gumbase mit den übrigen Komponenten intensiv gemischt. Dabei ist die sich in Axialrichtung erstreckende Länge des Hochschermischers geringer als der vierfache Durchmesser des Hochschermischers, wobei der Durchmesser des Hochschermischers durch den Abstand zwischen den diametral gegenüberliegenden, radial äußeren Enden 14 der Mischflügel 13 bestimmt wird. Dieser Durchmesser liegt bei üblichen Ausführungen zwischen 200 und 300 mm, selten auch bei 400 mm.

Es sei hier noch erwähnt, dass die Statorteile 15 sich radial nach innen erstrecken und an diesem nach innen ragenden Bereich mit Zähnen 16 versehen sind. Dies fördert die Scherwirkung des Hochschermischers erheblich. Durch diese Scherwirkung wird das im Hochschermischer befindliche Material erwärmt und tritt so nach einer Verweilzeit im Mischer von weniger als 30 sec. an einer in Tangentialrichtung liegenden Austrittsöffnung 17 aus dem Mischer 4 aus. Die Temperatur des austretenden Materials wird über einen Temperaturfühler 18 erfaßt und über die Steuerung 10 verarbeitet.

Im hier dargestellten Beispiel erhält die Steuerung 10 mittels eines entsprechenden Meßwertaufnehmers 19 außerdem noch Meßwerte über die Antriebsleistung des als Drehstrommotor ausgeführten Antriebmotors 20, dessen Leistung über ein Getriebe 21 auf den Hochschermischer 4 übertragen wird. Durch entsprechende Regelungen kann die Steuerung 10 genutzt werden, um die Maschine für unterschiedliche Produktqualitäten oder unterschiedliche Durchsatzleistungen optimal einzustellen:

Außer der Drehzahl des Antriebsmotors 20 regelt die Steuerung 10 auch noch die Geschwindigkeit des Motors 23 für die Schnecke 3 und damit die Feststoffzufuhr zum Hochschermischer 4, als auch über die Motoren 9 die Dosierpumpen 8 und damit die Flüssigkeitszufuhr zum Hochschermischer 4.

Wie bereits erwähnt, ist dabei die Austrittstemperatur eine für jede Produktqualität signifikante Größe, die auch über die im Mischgut durch den Hochschermischer dissipierte Antriebsenergie einstellbar ist. Die Austrittstemperatur kann bei der hier beschriebenen Ausführungsform der Anlage Werte zwischen 50 und 75 °C aufweisen.

Die austretende Masse wird noch über eine der Austrittsöffnung 17 nachgeschaltete Kühlvorrichtung 22 auf eine übliche Verarbeitungstemperatur von ca. 45 °C herabgekühlt, wobei es sich bei dieser Kühlvorrichtung um eine Kühlwalze oder um einen gekühlten Verformextruder handeln kann.

Die Erfindung bildet somit insgesamt eine vorteilhafte Möglichkeit, um Kaugummimasse herzustellen, da sie kurze Verweilzeiten bei kleinen Maschinen mit entsprechend geringen Kosten und Platzbedarf realisiert, wobei hieraus resultiert, dass nur geringe Produkt- und Zeitverluste bei Rezepturwechseln oder Reinigungen der Anlage auftreten. Insbesondere können aufgrund der geringen Verweilzeiten minimalste Verluste an Geruchs- und Geschmacksstoffen erreicht werden und auch eine hohe Mischungsqualität mit sehr hoher Konstanz. Diese führt wiederum zu entsprechend geringen Verlusten bei der nachfolgenden Verpackung.

**Patentansprüche**

1. Vorrichtung zur Herstellung von Kaugummi mit einem in Axialrichtung durchströmten Hochschermischer (4), in dem eine Vielzahl von Statorteilen (15) radial nach innen ragend an der Innenwand eines im Wesentlichen zylinderförmigen Gehäuse (24) angeordnet sind und in dem Kaugummigrundmasse geknetet und mit Aroma- und/oder Farbstoffen vermengt wird,
   **dadurch gekennzeichnet,**
   **dass** die Statorteile (15) ringförmig sind und dass mit ihnen unter Bildung von Mahlspalten die radial äußeren Enden von umlaufenden Mischflügeln (13) kämmen.

2. Vorrichtung gemäß Anspruch 1,
   **dadurch gekennzeichnet,**
   **dass** die Statorteile (15) mit Zähnen (16) versehen sind.

3. Vorrichtung gemäß Anspruch 1,
   **dadurch gekennzeichnet,**
   **dass** der Hochschermischer (4) ein Verhältnis von Länge zu Durchmesser (L/D) von ≤ 4 hat.

4. Vorrichtung gemäß Anspruch 1,
   **dadurch gekennzeichnet,**
   **dass** der Hochschermischer mit einer Froude-Zahl zwischen 18 und 400 arbeitet.

5. Vorrichtung gemäß Anspruch 1,
   **dadurch gekennzeichnet,**
   **dass** die Produktverweilzeit im Mischer (4) kürzer als 30 sec. ist.

6. Vorrichtung gemäß Anspruch 1,
   **dadurch gekennzeichnet,**
   **dass** dem Hochschermischer (4) im Gehäuse (24) ein Einzugsbereich (5) vorgeschaltet ist zur Strömungsumlenkung, Vormischung und für die Vorzerkleinerung.

7. Vorrichtung gemäß Anspruch 6,
   **dadurch gekennzeichnet,**
   **dass** in den Einzugsbereich (5) eine Zuführleitung (6) für Aroma- und/oder Farbstoffe mündet.

8. Vorrichtung gemäß Anspruch 1,
   **dadurch gekennzeichnet,**
   **dass** am Ausgang (17) des Mischers (4) ein Temperaturfühler (18) vorgesehen ist, dessen Meßwert in einer Steuerung (10) verarbeitet wird, über die die Drehzahl einer die Mischflügel (13) tragenden Rotorwelle (11) regelbar ist.

9. Vorrichtung gemäß Anspruch 8,
   **dadurch gekennzeichnet,**

**dass** ein Meßwertaufnehmer (19) für die Antriebsleistung der Rotorwelle vorgesehen ist, dessen Meßwert in der Motorsteuerung (10) verarbeitbar ist.

10. Vorrichtung gemäß Anspruch 1,
    **dadurch gekennzeichnet,**
    **dass** dem Mischer (4) eine Kühlvorrichtung (22) nachgeschaltet ist.

11. Vorrichtung gemäß Anspruch 10,
    **dadurch gekennzeichnet,**
    **dass** die Kühlvorrichtung (22) eine Kühlwalze ist.

12. Vorrichtung gemäß Anspruch 10,
    **dadurch gekennzeichnet,**
    **dass** die Kühlvorrichtung (22) ein gekühlter Verformextruder ist.

13. Vorrichtung gemäß Anspruch 1,
    **dadurch gekennzeichnet,**
    **dass** dem Mischer (4) eine steuerbare Dosiervorrichtung (1) zum kontinuierlichen Zuführen von Feststoffkomponenten vorgeschaltet ist.

**Claims**

1. Apparatus for the production of chewing gum, with a high-speed shearing mixer (4) through which the flow is in the axial direction, in which a plurality of stator parts (15) are disposed so as to project radially inward on the inner wall of a substantially cylindrical housing (24) and in which chewing gum base compound is kneaded and mixed with flavourings and/or colourings,
   **characterised in that**
   the stator parts (15) are annular and that the radially outer ends of rotating mixing blades (13) mesh with them to form grinding gaps.

2. Apparatus as claimed in Claim 1,
   **characterised in that**
   the stator parts (15) are provided with teeth (16).

3. Apparatus as claimed in Claim 1,
   **characterised in that**
   the high-speed shearing mixer (4) has a ratio of length to diameter (L/D) of ≤4.

4. Apparatus as claimed in Claim 1,
   **characterised in that**
   the high-speed shearing mixer operates with a Froude number between 18 and 400.

5. Apparatus as claimed in Claim 1,
   **characterised in that**
   the product residence time in the mixer (4) is shorter than 30 seconds.

6. Apparatus as claimed in Claim 1,
   **characterised in that**
   a feed zone (5) is connected upstream of the high-speed shearing mixer (4) in the housing (24) for flow deflection, pre-mixing and for preliminarily size reduction.

7. Apparatus as claimed in Claim 6,
   **characterised in that**
   a supply line (6) for flavourings and/or colourings opens into the feed zone (5).

8. Apparatus as claimed in Claim 1,
   **characterised in that**
   at the outlet (17) of the mixer (4) a temperature sensor (18) is provided, the measured value of which is processed in a control means (10) by means of which the rotational speed of a rotor shaft (11) carrying the mixing blades (13) can be regulated.

9. Apparatus as claimed in Claim 8,
   **characterised in that**
   a measured value sensor (19) is provided for the driving power of the rotor shaft, the measured value of which can be processed in the motor control means (10).

10. Apparatus as claimed in Claim 1,
    **characterised in that**
    a cooling device (22) is connected downstream of the mixer (4).

11. Apparatus as claimed in Claim 10,
    **characterised in that**
    the cooling device (22) is a cooling roller.

12. Apparatus as claimed in Claim 10,
    **characterised in that**
    the cooling device (22) is a cooled forming extruder.

13. Apparatus as claimed in Claim 1,
    **characterised in that**
    a controllable proportioning device (1) is connected upstream of the mixer (4) for the continuous supply of solid components.

**Revendications**

1. Dispositif de préparation de chewing-gum, avec un malaxeur à fort cisaillement (4) traversé dans le sens axial, dans lequel une pluralité d'éléments de stator (15) sont disposés de façon à faire saillie à l'intérieur au niveau de la paroi intérieure d'un boîtier de forme essentiellement cylindrique (24) et dans lequel de la matière de base du chewing-gum est pétrie et mélangée à des substances aromatiques et/ou colorantes, **caractérisé en ce que** les éléments de stator (15) sont circulaires et **en ce que** les extrémités radialement extérieures de pales de mélange rotatives (13) s'engrènent dans ceux-ci en formant des fentes dans la masse broyée.

2. Dispositif selon la revendication 1, **caractérisé en ce que** les éléments de stator (15) sont pourvus de dents (16).

3. Dispositif selon la revendication 1, **caractérisé en ce que** le malaxeur à fort cisaillement (4) présente un rapport de longueur au diamètre (L:D) inférieur ou égal à 4.

4. Dispositif selon la revendication 1, **caractérisé en ce que** le malaxeur à fort cisaillement (4) fonctionne avec un nombre de Froude entre 18 et 400.

5. Dispositif selon la revendication 1, **caractérisé en ce que** le temps de séjour du produit dans le malaxeur (4) est inférieur à 30 secondes.

6. Dispositif selon la revendication 1, **caractérisé en ce qu'**une zone d'amenée (5) est prévue dans le boîtier (24) en amont du malaxeur à fort cisaillement (4), destinée au renversement de l'écoulement, au prémélange et à la réduction préalable en petits morceaux.

7. Dispositif selon la revendication 6, **caractérisé en ce qu'**une conduite d'amenée (6) des substances aromatiques et/ou colorantes débouche dans la zone d'amenée (5).

8. Dispositif selon la revendication 1, **caractérisé en ce qu'**une sonde de température (18) est prévue à la sortie (17) du malaxeur (4), dont la valeur mesurée est traitée par un dispositif de commande (10) qui permet de régler la vitesse de rotation d'un arbre de rotor (11) portant les pales de mélange (13).

9. Dispositif selon la revendication 8, **caractérisé en ce qu'**un transducteur (19) est prévu pour la puissance motrice de l'arbre du rotor, dont la valeur mesurée peut être traitée par le dispositif de commande du moteur (10).

10. Dispositif selon la revendication 1, **caractérisé en ce qu'**un dispositif de refroidissement (22) est disposé en aval du malaxeur (4).

11. Dispositif selon la revendication 10, **caractérisé en ce que** le dispositif de refroidissement (22) est un rouleau refroidisseur.

12. Dispositif selon la revendication 10, **caractérisé en** ce que le dispositif de refroidissement (22) est une extrudeuse à déformer refroidie.

13. Dispositif selon la revendication 1, **caractérisé en ce qu'**un dispositif de dosage programmable (1) est disposé en amont du malaxeur (4), pour amener constamment les composants solides.

Fig. 1

Fig. 2